# EUROPÄISCHE PATENTSCHRIFT

(11) **EP 2 867 585 B1**
(45) Veröffentlichungstag und Bekanntmachung des Hinweises auf die Patenterteilung: **02.12.2020**
(21) Anmeldenummer: 13731293.0
(22) Anmeldetag: 15.06.2013
(51) Int. Cl.: B01D 47/06, F24C 15/20

(54) **VERFAHREN ZUM BETREIBEN EINER ABLUFTANLAGE UND ABLUFTANLAGE FÜR EINE KÜCHE**
METHOD FOR OPERATING AN EXHAUST AIR SYSTEM AND EXHAUST AIR SYSTEM FOR A KITCHEN
PROCÉDÉ PERMETTANT DE FAIRE FONCTIONNER UN SYSTÈME D'ÉVACUATION D'AIR ET SYSTÈME D'ÉVACUATION D'AIR DESTINÉ À UNE CUISINE

(30) Priorität: 27.06.2012 DE 102012012689
(43) Veröffentlichungstag der Anmeldung: 06.05.2015
(73) Patentinhaber: Südluft Systemtechnik GmbH & Co. KG, 71032 Böblingen (DE)
(72) Erfinder: HÖGLINGER, Wolfgang, 94405 Landau (DE); TRIEBE, Olaf, 94481 Grafenau (DE)
(74) Vertreter: Ostertag & Partner Patentanwälte mbB
(86) Internationale Anmeldenummer: PCT/EP2013/001783
(87) Internationale Veröffentlichungsnummer: WO 2014/000868

(56) Entgegenhaltungen:
- EP-A1- 1 775 035
- WO-A1-2004/016988
- WO-A2-95/18943
- CN-A- 1 363 801
- CN-Y- 2 301 641
- DE-A1- 19 509 611
- DE-B1- 2 414 573
- TW-A- 200 923 282
- US-A- 4 753 218
- US-A- 6 125 841

## Beschreibung

Die Erfindung betrifft ein Verfahren zum Betreiben einer Abluftanlage für eine Küche, bei welchem
a) mit Dünsten beladene Küchenabluft aus einem Küchenraum abgesaugt wird und auf ihrem Strömungsweg einen nach unten zu dem Küchenraum hin offenen Ansaugbereich einer Abzugseinrichtung sowie einen Abführkanal durchströmt, wobei der nach unten offene Ansaugbereich in Form eines Stauraums für die angesaugte Küchenabluft von unten und aus seitlicher Richtung barriere- und schikanefrei zugänglich ist;
b) die Küchenabluft auf ihrem Strömungsweg mit einem Reinigungsmittel beaufschlagt wird.

Außerdem betrifft die Erfindung eine Abluftanlage für eine Küche zur Durchführung des Verfahrens mit
a) einer Abzugseinrichtung mit einem nach unten zu einem Küchenraum hin offenen Ansaugbereich, der zu einem Abführkanal führt, wobei der nach unten offene Ansaugbereich in Form eines Stauraums für angesaugte Küchenabluft von unten und aus seitlicher Richtung barriere- und schikanefrei zugänglich ist;
b) einem Gebläsesystem, mittels welchem mit Dünsten beladene Küchenabluft aus dem Küchenraum absaugbar ist, wobei die Küchenabluft auf ihrem Strömungsweg den Ansaugbereich der Abzugseinrichtung sowie den Abführkanal durchströmt;
c) einem Reinigungssystem, mittels welchem die Küchenabluft auf ihrem Strömungsweg mit einem Reinigungsmittel beaufschlagbar ist.

In Abluftanlagen für Küchen sind Abzugseinrichtungen beispielsweise als Abzugshauben oder Abzugsdecken ausgebildet. Diese begrenzen als nach unten offenen Ansaugbereich einen so genannten Stauraum. Ein solcher nach unten offener Ansaugbereich ist für die angesaugte Küchenabluft von unten und aus seitlicher Richtung barriere- und schikanenfrei zugänglich, so dass die Küchenabluft ungehindert und ohne Umwege oder Umleitungen von unten einströmen kann. Anders ausgedrückt ist ein solcher Ansaugbereich somit strömungstechnisch von unten frei zugänglich.

Abluftanlagen für Küchen sind beispielsweise aus der US 6,125,841 A1, der DE 24 14 573 B1, der CN 1 363 801 A oder der CN 2 301 641 Y bekannt. Die DE 24 14 573 B1 offenbart den Oberbegriff des Anspruchs 5.

Die Küchenabluft ist in der Regel mit Dünsten wie Bratfett oder anderen organischen Abluftbestandteilen beladen. Wenn die Küchenabluft mittels der Abluftanlage aus dem Küchenraum abgeführt wird, setzen sich diese Dünste zum Teil an den Oberflächen ab, die von der Küchenabluft auf deren Strömungsweg überströmt werden.

Diese Verunreinigungen sind nicht nur unhygienisch, sondern führen auch zu erhöhter Brandgefahr in den innen und außen liegenden Bereichen der Abluftanlage, und müssen daher regelmäßig entfernt werden.

Für innere Bereiche einer Abluftanlage der eingangs genannten Art ist es beispielsweise aus der DE 10 2004 036 837 A1 bekannt, in eine innen liegende Abluftkammer einer Abzugshaube ein Reinigungsmittel einzusprühen und einen automatisierten Reinigungsprozess durchzuführen. Der Ansaugbereich sowie außen liegende Oberflächen der Abluftanlage bleiben davon jedoch unberührt und müssen manuell von Hand gereinigt werden.

Es ist daher Aufgabe der Erfindung, ein Verfahren und eine Abluftanlage der eingangs genannten Art zu schaffen, bei welchen auch eine effektive Reinigung zumindest des Ansaugbereichs möglich ist.

Diese Aufgabe wird bei einem Verfahren der eingangs genannten Art dadurch gelöst, dass
c) die Küchenabluft mit dem Reinigungsmittel beaufschlagt wird, bevor die Küchenabluft zum Abführkanal gelangt;
d) ein Reinigungsmittel verwendet wird, welches außen liegende Oberflächen, die den Strömungsweg begrenzen, benetzen und reinigen kann;
   wobei
e) das Reinigungsmittel in den Ansaugbereich (18) eingebracht wird;
f) das Reinigungsmittel über Sprühdüsen (40) in die Küchenabluft eingesprüht wird und als Sprühdüsen (40) Nebeldüsen verwendet werden;
   und
g) die Küchenabluft derart mit Reinigungsmittel beaufschlagt wird, dass dieses vollständig von dem Küchenabluftstrom erfasst und mitgeschleppt wird.

Die Erfindung beruht auf der Erkenntnis, dass es auch bei einem nach unten hin offenen Ansaugbereich möglich ist, die strömende Küchenabluft mit Reinigungsmittel zu beaufschlagen und auf diesem Wege auch außen liegende Oberflächen mit Reinigungsmittel zu benetzen und zu reinigen, ohne dass dieses Reinigungsmittel in den Küchenraum oder gar auf die Kochstellen gelangt.

Um letzteres zu vermeiden, ist bei der oben erläuterten DE 10 2004 036 837 A1 und auch bei weiteren vom Markt her bekannten Abluftanlagen nämlich stets dafür gesorgt, dass es keine freie Verbindung zwischen dem Einsprühort des Reinigungsmittels und dem Küchenraum gibt. Aus diesem Grund wird beispielsweise in der DE 10 2004 036 837 A1 Reinigungsmittel nur in die Abluftkammer eingesprüht, die in Strömungsrichtung hinter dem Ansaugbereich liegt und hiervon durch einen Aerosolabscheider getrennt ist, so dass kein Reinigungsmittel entgegen der Strömungsrichtung zurück in den Ansaugbereich oder den Küchenraum fließen kann.

Es ist günstig, wenn als Reinigungsmittel ein mikrobiologisch aktives Reinigungsmittel verwendet wird. Hierauf wird weiter unten nochmals eingegangen.

Es ist besonders vorteilhaft, wenn das Reinigungsmittel in den Ansaugbereich eingebracht wird. In diesem Fall werden die benachbarten Oberflächen des Ansaugbereichs gut von dem Reinigungsmittel erreicht.

Es ist außerdem von Vorteil, wenn die Küchenabluft derart mit Reinigungsmittel beaufschlagt wird, dass dieses vollständig von dem Küchenabluftstrom erfasst und mitgeschleppt wird. Vorzugsweise werden das Abgabevolumen und der Abgabedruck für das Reinigungsmittel dabei abhängig von dem Abluftvolumenstrom der Küchenabluft eingestellt. Je größer und stärker der Abluftvolumenstrom ist, desto mehr Reinigungsmittel kann eingebracht werden, welches dann dennoch vollständig von dem Küchenabluftstrom aufgenommen und mitgeführt wird, ohne dass Reinigungsmittel entgegen der Strömungsrichtung der Küchenabluft strömen oder fließen kann. Der Abluftvolumenstrom kann beispielsweise mit einem Strömungssensor in dem Abführkanal ermittelt werden.

Es hat sich außerdem als günstig erwiesen, wenn die Küchenabluft auf ihrem Strömungsweg durch eine Filtereinrichtung strömt, bevor sie in den Abführkanal gelangt.

In diesem Fall ist es bevorzugt, dass die Küchenabluft mit dem Reinigungsmittel beaufschlagt wird, bevor sie zu der Filtereinrichtung gelangt. Auf diese Weise wird auch die Filtereinrichtung mit Reinigungsmittel benetzt und kann so effektiv gereinigt werden. Dabei werden auch außen liegende Bereiche der Filtereinrichtung erreicht, was bislang nicht möglich war. Beim Stand der Technik war daher von Zeit zu Zeit eine manuelle Reinigung der Filtereinrichtung angebracht.

Eine gute Verteilung des Reinigungsmittels in dem Küchenabluftstrom kann erreicht werden, wenn das Reinigungsmittel über Sprühdüsen in die Küchenabluft eingesprüht wird.

Erfindungsgemäß werden dabei als Sprühdüsen Nebeldüsen verwendet. Hierdurch ist eine besonders feine Verteilung des Reinigungsmittels möglich.

Die oben angegebene Aufgabe wird bei einer Abluftanlage der eingangs genannten Art dadurch gelöst, dass
d) das Reinigungssystem eine Abgabeeinrichtung umfasst, mittels welcher die Küchenabluft mit dem Reinigungsmittel beaufschlagbar ist, bevor die Küchenabluft zum Abführkanal gelangt, so dass außen liegende Oberfläche, die den Strömungsweg begrenzen, benetzt und gereinigt werden können;
e) das Reinigungsmittel mittels der Abgabeeinrichtung in den Ansaugbereich einbringbar ist;
f) die Abgabeeinrichtung Sprühdüsen umfasst, die als Nebeldüsen ausgebildet sind.

Die Vorteile hierzu und zu den nachfolgend erläuterten Merkmalen entsprechen sinngemäß den oben zum Verfahren erläuterten Vorteilen.

Es ist demzufolge günstig, wenn das Reinigungsmittel ein mikrobiologisch aktives Reinigungsmittel ist.

Vorzugsweise ist das Reinigungsmittel mittels der Abgabeeinrichtung in den Ansaugbereich einbringbar.

Es ist günstig, wenn eine Filtereinrichtung vorhanden ist, welche von der Küchenabluft auf ihrem Strömungsweg durchströmt wird, bevor diese in den Abführkanal gelangt.

Es ist dann außerdem vorteilhaft, wenn die Küchenabluft mittels der Abgabeeinrichtung mit dem Reinigungsmittel beaufschlagbar ist, bevor die Küchenabluft zu der Filtereinrichtung gelangt.

In der Praxis hat es sich als günstig erwiesen, wenn die Abgabeeinrichtung Sprühdüsen umfasst.

Erfindungsgemäß sind die Sprühdüsen als Nebeldüsen ausgebildet

Die Sprühdüsen sind insbesondere Venturidüsen, die aus einer Druckluftquelle mit Druckluft beaufschlagbar sind und eine Sogwirkung erzeugen, durch welche Reinigungsmittel über eine Leitung aus einem Reinigungsmittelreservoir zur Venturidüse ansaugbar ist. Auf diese Weise ist kein eigenes Fördersystem, wie eine Pumpe oder dergleichen, notwendig, um das Reinigungsmittel zu den Sprühdüsen zu fördern.

Nachfolgend werden Ausführungsbeispiele der Erfindung anhand der Zeichnungen näher erläutert. In diesen zeigen:
- Figur 1: eine schematische Seitenansicht eines Kochbereichs mit einer Abluftanlage gemäß einem ersten Ausführungsbeispiel, die eine Abzugshaube umfasst;
- Figur 2: schematisch ein Steuer- und Versorgungssystem zum Betrieb der Abluftanlage;
- Figur 3: eine schematische Seitenansicht eines Kochbereichs mit einer Abluftanlage gemäß einem zweiten Ausführungsbeispiel, die eine Abzugsdecke umfasst.

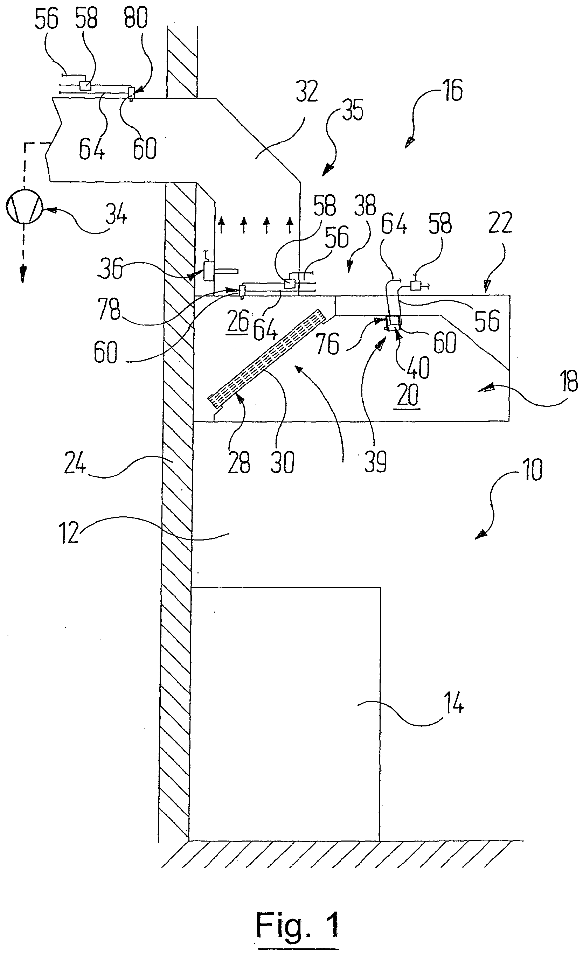

Figur 1 zeigt einen Kochbereich 10 einer gewerblichen Küche mit einem Küchenraum 12, in dem eine Kochstelle 14 angeordnet ist. Um beim Kochen entstehende Dünste aus dem Küchenraum 12 zu entfernen, ist eine Abluftanlage 16 vorhanden.

Die Abluftanlage 16 umfasst einen nach unten zum Küchenraum 12 hin offenen Ansaugraum 18, welcher in an und für sich bekannter Art und Weise als Stauraum 20 ausgebildet ist. Dieser Stauraum 20 ist oberhalb der Kochstelle 14 angeordnet und beim Ausführungsbeispiel gemäß Figur 1 von einer Abzugshaube 22 begrenzt, die an einer Wand 24 oder einer hier nicht zu erkennenden Decke des Küchenraums 12 montiert ist und eine Abzugseinrichtung definiert.

Die Abzugshaube 22 begrenzt außerdem eine Abluftkammer 26, welche über eine Filtereinrichtung 28 mit dem Stauraum 20 verbunden ist. Die Filtereinrichtung 28 umfasst beim vorliegenden Ausführungsbeispiel einen Aerosolabscheider 30. Ein solcher Aerosolabscheider ist ein dauerhafter Filter, der dazu dient, in der abgesaugten Küchenabluft enthaltene Fett- und Schmutzpartikel abzufangen. Der Aerosolabscheider 30 ist beispielsweise aus labyrinthartig verschachtelten Leitblechen aus Edelstahl und einem dahinter angeordneten Filter aus Edelstahlgeflecht ausgebildet. An dem kalten Metall schlagen sich Fettdämpfe nieder und Schmutzpartikel bleiben an der großen Oberfläche haften. Es können in der Abzugshaube 22 auch andere Arten von Filtereinrichtungen 28 eingesetzt werden, z.B. Aktivkohlefilter.

Die Abluftkammer 26 führt zu einem Luftkanal 32, der über ein nur sehr schematisch angedeutetes Gebläsesystem 34 ins Freie führt, welches als Saugzug arbeitet. Die Abluftkammer 26 der Abzugshaube 22 und der Luftkanal 32 bilden somit gemeinsam einen Abführkanal 35 für die Küchenabluft.

In dem Luftkanal 32 ist ein Strömungssensor 36 vorhanden, mittels welchem der Abluftvolumenstrom erfasst werden kann, mit dem die Küchenabluft durch den Luftkanal 32 strömt.

Im Betrieb des Gebläsesystems 34 wird mit Küchendünsten beladene Luft von der Kochstelle 14 und aus dem Küchenraum 12 zunächst in den Stauraum 20 angesaugt. Diese Küchenabluft strömt dann durch den Aerosolabscheider 30 hindurch in den Abführkanal 35, d.h. zunächst in die Abluftkammer 26 und von dort in den Luftkanal 32 hinein, über welchen sie ins Freie geleitet wird. Das Strömen der Küchenabluft durch die Abluftanlage 16 ist durch Pfeile veranschaulicht. Bezogen auf die Abluftanlage 16 definieren somit der Ansaugbereich 18 und somit vorliegend der Stauraum 20 sowie außerdem die Abluftkammer 26 und der Luftkanal 32 den Strömungsweg der Küchenabluft.

Wie bereits eingangs angesprochen, ist der nach unten offenen Ansaugbereich 18 in Form des Stauraums 20 für die angesaugte Küchenabluft von unten und aus seitlicher Richtung barriere- und schikanenfrei zugänglich, so dass die Küchenabluft ungehindert und ohne Umwege oder Umleitungen von unten in den Stauraum 20 einströmen kann. Anders ausgedrückt ist der Stauraum 20 somit strömungstechnisch von unten frei zugänglich. Auch eine mögliche Gitterabdeckung des Stauraumes 20 oder dergleichen behindert das Einströmen der Küchenabluft in den Stauraum 20 von unten her nicht, so dass auch ein derart abgedeckter Stauraum 20 folglich als nach unten hin offen und als strömungstechnisch von unten frei zugänglich verstanden wird.

Die Abluftanlage 16 umfasst ein Reinigungssystem 38 mit einer Abgabeeinrichtung 39, mittels welcher Küchenabluft mit einem Reinigungsmittel beaufschlagt werden kann, bevor die Küchenabluft zur Abluftkammer 26 und damit zum Abführkanal 35 gelangt. Wenn, wie es beim vorliegenden Ausführungsbeispiel der Fall ist, in Strömungsrichtung der Küchenabluft vor dem Abführkanal bzw. vor der Abluftkammer eine Filtereinrichtung 28 vorhanden ist, kann die Küchenabluft mit einem Reinigungsmittel beaufschlagt werden, bevor die Küchenabluft zur Filtereinrichtung 28 gelangt. Dieses Reinigungssystem 38 kann auch nachträglich bei einer bereits vorhandenen Abluftanlage installiert werden.

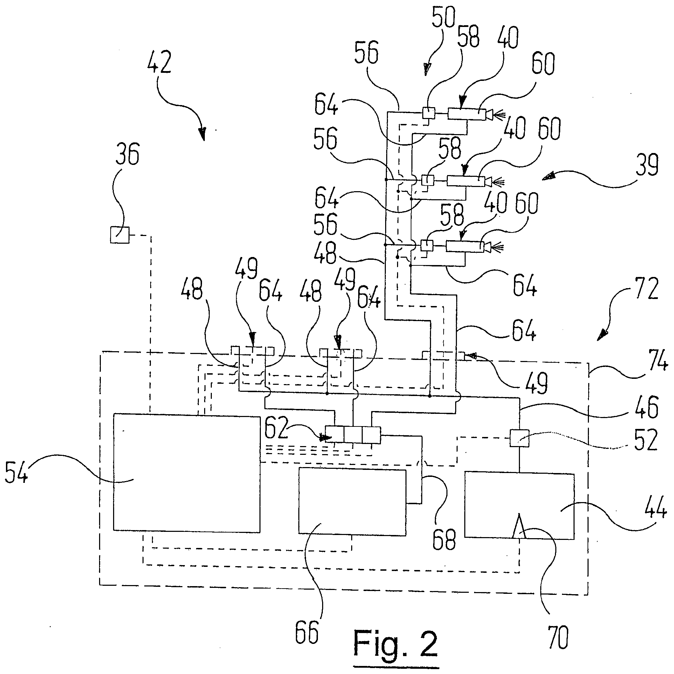

Das Reinigungssystem 38 umfasst als Abgabeeinrichtung 39 für das Reinigungsmittel mehrere Sprühdüsen 40, die im Stauraum 20 angeordnet sind und von denen in Figur 1 nur eine einzige zu erkennen ist. Diese Sprühdüsen 40 werden über ein in Figur 2 gezeigtes Steuer- und Versorgungssystem 42 betrieben.

Die Sprühdüsen 40 werden aus einem Reinigungsmittelreservoir 44 mit dem Reinigungsmittel gespeist. Hierzu geht von dem Reinigungsmittelreservoir 44 eine Hauptleitung 46 ab, von welcher mehrere Verteilerleitungen 48 abzweigen. Jede Verteilerleitung 48 führt zu einer Sprühgruppe 50, die mehrere Sprühdüsen 40 umfasst. Die Hauptleitung 46 kann mittels eines Hauptventils 52 freigegeben oder verschlossen werden, das von einer Zentralsteuerung 54 angesteuert wird. Das Hauptventil 52 kann beispielsweise als Magnetventil ausgebildet sein.

In Figur 2 sind Fluidleitungen als durchgezogene Linien und Steuerleitungen als gestrichelten Linien veranschaulicht, wobei die Steuerleitungen der Übersichtlichkeit halber nicht eigens mit Bezugszeichen versehen sind.

Figur 2 zeigt nun beispielhaft drei Anschlussstellen 49 für Sprühgruppen 50. Eine solche Sprühgruppe 50 umfasst eine oder mehrere Sprühdüsen 40, wobei in Figur 2 lediglich eine Sprühgruppe 50 mit beispielhaft drei Sprühdüsen 40 gezeigt ist. Es können auch mehr oder weniger als drei solcher Anschlussstellen 49 bzw. Sprühgruppen 50 vorgesehen sein, die ihrerseits auch mehr oder weniger als drei Sprühdüsen 40 umfassen können. Somit können beim vorliegenden Ausführungsbeispiel eine Sprühgruppe 50, zwei Sprühgruppen 50 oder drei Sprühgruppen 50 vorgesehen und betrieben werden.

Die Anschlussstellen 49 können als Schnellverschluss-Adapter ausgebildet sein, so dass eine Sprühgruppe 50 rasch an das Steuer- und Dosiersystem 42 angeschlossen oder von diesem entfernt werden kann.

Jede Sprühdüse 40 ist über eine Versorgungsleitung 56 mit der Verteilerleitung 48 verbunden. In der Versorgungsleitung 56 jeder Sprühdüse 40 ist ein Steuerventil 58 angeordnet, so dass zusätzlich der Zustrom von Reinigungsmittel zu jeder Sprühdüse 40 bei geöffnetem Hauptventil 50 mittels der Zentralsteuerung 54 wahlweise freigegeben oder unterbrochen werden kann.

Beim vorliegenden Ausführungsbeispiel sind die Sprühdüsen 40 Nebeldüsen und derart eingerichtet, dass sie einen feinverteilten Sprühnebel erzeugen. Außerdem sind die Sprühdüsen 40 als Venturidüsen 60 ausgebildet, wie es an und für sich bekannt ist. Diese Venturidüsen sind aus Edelstahl gefertigt. Die Venturidüsen 60 werden über eine Ventilanordnung 62 und Druckluftleitungen 64 aus einem Kompressor 66 mit Druckluft versorgt, dessen Druckseite über eine Zuführleitung 68 mit der Ventilanordnung 62 verbunden ist. Durch die Sogwirkung der Venturidüsen 60 wird Reinigungsmittel bei geöffnetem Hauptventil 52 und geöffnetem Steuerventil 58 zur entsprechenden Venturidüse 60 angesaugt, ohne dass es weiterer Fördermaßnahmen bedarf.

Sowohl der Kompressor 66 als auch die Ventilanordnung 62 werden ebenfalls mittels der Zentralsteuerung 54 angesteuert. Hierbei kann die Druckluftleitung 64 mittels der Ventilanordnung 62 für jede Sprühgruppe 50 separat zu- oder abgeschaltet werden, so dass alle Venturidüsen 60 einer Sprühgruppe 50 als Gruppe mit Druckluft versorgt werden oder nicht.

Statt eines Kompressors kann auch eine andere Druckluftquelle vorhanden, wie beispielsweise eine Druckluftflasche eingesetzt werden. Gegebenenfalls kann auch auf eine bereits bestehende zentrale Druckluftversorgung zurückgegriffen werden.

Als Reinigungsmittel, das als Sprühnebel in den Stauraum 20 der Abluftanlage 16 eingeblasen wird, wird ein mikrobiologisch aktives flüssiges Reinigungsmittel verwendet. Mikrobiologisch aktive Reinigungsmittel sind an sich bekannt. Sie enthalten spezielle Mikroorganismen wie Bakterien oder andere Mikrokulturen, die in der Lage sind, organische Verunreinigungen wie fett- und ölhaltige Ablagerungen zu Wasser und Kohlendioxid abzubauen. Mikrobiologische aktive Reinigungsmittel sind unschädlich und stellen eine besonders umweltverträgliche Methode der Reinigung dar. Die darin enthaltenen Mikroorganismen belasten die Umwelt nicht, sondern leisten in Kläranlagen und Gewässern weitere nützliche Dienste. Zudem sind solche Reinigungsmittel materialverträglich und verursachen keine Korrosion oder Versprödung von Material oder Dichtungen. Ein Beispiel für ein solches Reinigungsmittel ist das Produkt "Microclean Hood" der Firma CLEANCORP.

Der Reinigungsmittelpegel innerhalb des Reinigungsmittelreservoirs 44 wird durch einen Pegelsensor 70 überwacht, dessen Ausgangssignale an die Zentralsteuerung 54 gehen. Wenn ein unterer Schwellenwert des Pegels unterschritten wird, kann die Zentralsteuerung 54 einen Warnhinweis und eine Aufforderung anzeigen, das Reinigungsmittelreservoir 44 aufzufüllen oder gegen ein gefülltes Reinigungsreservoir auszutauschen.

Bei einer nicht eigens gezeigten Abwandlung können auch mehrere Reinigungsreservoire vorhanden sein, die mit demselben oder auch mit unterschiedlichen Reinigungsmitteln gefüllt sein können. Diese können dann wahlweise zum Einsatz kommen.

Insgesamt ist durch das Steuer- und Versorgungssystem 42 eine Dosiereinrichtung 72 ausgebildet, über welche sowohl die Menge des in den Stauraum 20 der Abzugshaube 22 eingesprühten Reinigungsmittels als auch der Abgabedruck der Sprühdüsen 40 jeder Sprühgruppe 50 eingestellt werden kann.

Diese Dosiereinrichtung 72 kann kompakt in einem Steuerschrank 74 untergebracht sein, der nur in Figur 2 und dort lediglich gestrichelt angedeutet ist.

Alternativ kann die Dosiereinrichtung 72 auch als mobile Einheit ausgebildet sein und zur Verwendung an unterschiedliche Abzugssysteme angeschlossen werden. Auch für diesen Fall sind die Anschlussstellen 49 als Schnellverschluss-Adapter ausgebildet.

Die Menge des in den Stauraum 20 eingesprühten Reinigungsmittels wird darüber eingestellt, wie viele Sprühgruppen 50 und wie viele von deren Sprühdüsen 40 aktiviert werden.

Der Abgabedruck der Sprühdüsen 40 hängt von dem Druck ab, mit welchem die Druckluft an den Sprühdüsen 40 anliegt und wird über eine Ansteuerung des Kompressors 66 durch die Zentralsteuerung 54 eingestellt. Gegebenenfalls umfasst der Kompressor 66 einen Druckminderer, der z.B. in der Zuführleitung 68 angeordnet sein kann.

Die Abgabemenge und der Abgabedruck der Sprühdüsen 40 kann durch die Zentralsteuerung 54 abhängig von dem Abluftvolumenstrom eingestellt werden, der mittels des Strömungssensors 36 im Luftkanal 32 erfasst wird.

Die Sprühgruppen 50 und die Sprühdüsen 40 können nun derart angesteuert werden, dass sichergestellt ist, dass das Reinigungsmittel, das in den Stauraum 20 hineingesprüht wird, vollständig von dem Küchenabluftstrom erfasst und mitgeschleppt wird. Das Reinigungsmittel wird dann von der Küchenabluft durch den Aerosolabscheider 30 hindurch in die Abluftkammer 26 mitgeführt und es kann kein Reinigungsmittel aus dem Stauraum 20 nach unten in den Küchenraum 12 und gegebenenfalls auf die Kochstelle 14 gelangen. Dabei hängen die einzustellenden Parameter des Reinigungssystems 42 einerseits von dem Abluftvolumenstrom ab, der mittels des Strömungssensors 36 im Luftkanal 32 erfasst wird. Andererseits hängen die einzustellenden Parameter des Reinigungssystems 42 von den konkreten technischen Spezifikationen der Sprühdüsen 40 sowie von deren Anordnung und Ausrichtung im Stauraum 20 der Abzugshaube 22 ab.

Hierbei können empirische Abhängigkeiten zu Grunde gelegt werden, oder es werden vor Inbetriebnahme der Abluftanlage 16 einige Messreihen gefahren, um eine Parametertabelle zur Korrelation des Abluftvolumenstroms und der Reinigungsmittelmenge und des Abgabedrucks der Sprühdüsen 40 zu erstellen.

Vor Ort kann die Anordnung und Orientierung der Sprühdüsen 40 auch nach der Montage der Abluftanlage 16 oder auch nach der Installation des Reinigungssystems 38 noch verändert werden. Hierzu sind diese lösbar und/oder beweglich über Verbindungsglieder 76 mit der Abzugshaube 22 verbunden. Durch anders gestaltete Verbindungsglieder 76, eine geänderte Anordnung und Ausrichtung der Sprühdüsen 40 können so beispielsweise Veränderungen an der Sprühgeometrie der Sprühgruppen 50 vorgenommen werden.

Wie anhand von Figur 1 gut zu erkennen ist, sind die Sprühdüsen 40 im Stauraum 20 so angeordnet, dass das Reinigungsmittel in Richtung auf den Aerosolabscheider 30 in den Stauraum 20 eingesprüht wird. Im Hinblick auf die Verteilung des Reinigungsmittels im Küchenabluftstrom spielt ist dabei unter anderem relevant, in welchem Abstand zur Decke des Stauraums 20 die Sprühdüsen 40 angebracht sind. Dieser Abstand kann dann beispielsweise über andere oder einstellbare Verbindungsglieder 76 an die vor Ort herrschenden Bedingungen angepasst werden.

Die Zentralsteuerung 54 kann einem vorgegebenen Programmablauf folgen oder programmierbar sein, so dass ein Programmablauf für den Reinigungsprozess frei programmierbar ist. Der Programmablauf für den Reinigungsprozess kann zeitgesteuert erfolgen oder manuell initiiert werden. Es können beispielsweise in vorprogrammierten Reinigungsintervallen ablaufende Reinigungszyklen festgelegt sein, die z.B. täglich nach Betriebsende oder vor Betriebsbeginn ablaufen.

Ein solcher Programmablauf kann beispielsweise wie folgt aussehen:
Zu Beginn des Reinigungsprozesses wird der Abluftvolumenstrom durch den Luftkanal 32 hindurch mittels des dortigen Strömungssensors 36 erfasst und an die Zentralsteuerung 54 übermittelt. Wenn das Gebläsesystem 34 den notwendige Abluftvolumenstrom erzeugt, wird der Kompressor 66 aktiviert und die Ventilanordnung 62 derart angesteuert, dass die Druckluft zu den Sprühgruppen 50 freigegeben wird, die beim Reinigungsprozess genutzt werden sollen.

Das Hauptventil 52 in der Hauptleitung 46 des Reinigungsmittelreservoirs 44 und die Steuerventile 58 in den Versorgungsleitungen 56 zu den Venturidüsen 60, die verwendet werden sollen, werden geöffnet, wodurch Reinigungsmittel zu den aktivierten Venturidüsen 60 gelangt und als Sprühnebel in den Stauraum 20 der Abzugshaube 22 eingeblasen wird.

Das Reinigungsmittel wird dabei von dem Abluftstrom erfasst und durch den Aerosolabscheider 30 in die Abluftkammer 26 und von dort in den Luftkanal 32 und durch diesen hindurch mitgeschleppt. Auf diesem Strömungsweg schlägt sich ein Teil des Reinigungsmittels an den Oberflächen nieder, die diesen Strömungsweg begrenzen, d.h. an den Wänden des Stauraums 20, an dem Material des Aerosolabscheiders 30, an den Wänden der Abluftkammer 26 und an den Wänden des Luftkanals 32.

Nach Ablauf der vorgegebenen Sprühzeit werden die einzelnen Sprühgruppen 50 deaktiviert, indem das Hauptventil 52 des Reinigungsmittelreservoirs 44, die Steuerventile 58 der Venturi-Düsen und die Ventilanordnung 62 geschlossen und der Kompressor 66 deaktiviert werden.

Die einzelnen Sprühgruppen 50 können auch zeitlich hintereinander als eine Art Sprühstaffel arbeiten, wozu die Sprühgruppen 50 entsprechend zeitlich aufeinander folgend in der oben beschriebenen Weise aktiviert und deaktiviert werden.

Wie in Figur 1 zu erkennen ist, umfasst das Reinigungssystem 38 ergänzend noch weitere Sprühdüsen für die Abluftkammer 26 der Abzughaube 22 und den Luftkanal 32; diese Sprühdüsen tragen die Bezugszeichen 78 bzw. 80. Die Sprühdüsen 78, 80 sind beim vorliegenden Ausführungsbeispiel ebenfalls als Venturidüsen 60 ausgebildet und arbeiten in der oben beschriebenen Art und Weise mit dem Steuer- und Versorgungssystem 42 zusammen.

Die Sprühdüsen 78 bzw. 80 sind ihrerseits Sprühgruppen zugeordnet, die technisch den Sprühgruppen 50 entsprechen und es gilt das oben zu den Sprühdüsen 40 Gesagte sinngemäß entsprechend. Auch hier kann ein staffelartiges Einsprühen in die Abluftkammer 26 oder den Luftkanal 32 erfolgen.

Der Hauptreinigungseffekt wird vorliegend jedoch durch das Einsprühen des Reinigungsmittels in den Stauraum 20 bewirkt, so dass auch auf die Sprühdüsen 78 und/oder 80 verzichtet werden kann.

Durch das Einsprühen des Reinigungsmittels in den Stauraum 20 wird der Aerosolabscheiders 30 vollständig mit dem mikrobiologisch aktiven Reinigungsmittel benetzt und dort abgeschiedene Fett- und Schmutzpartikel werden wirkungsvoll abgebaut und entfernt. Der Aerosolabscheider kann so annähernd wartungsfrei über einen langen Zeitraum betrieben werden.

Ebenso werden Fett- und Schmutzpartikel wirkungsvoll abgebaut, die sich an den Oberflächen abgeschieden haben, die den Strömungsweg der Küchenabluft begrenzen.

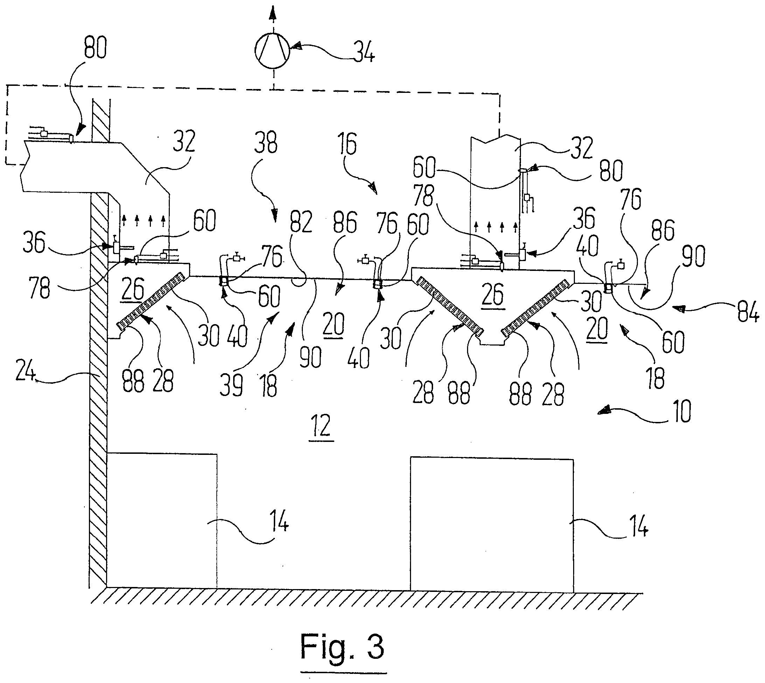

Figur 3 zeigt als Abwandlung einen Kochbereich 10 einer gewerblichen Küche mit einem Küchenraum 12, in dem mehrere Kochstellen 14 vorhanden sind, wobei es auch Kochstellen 14 gibt, die nicht an einer Wand, sondern frei im Raum angeordnet und von allen Seiten zugänglich sind. Komponenten, die den oben zu den Figuren 1 und 2 beschriebenen Komponenten entsprechen, tragen in Figur 3 dieselben Bezugszeichen.

Bei der dortigen Abluftanlage 16 ist keine separate Abzugshaube 22 vorhanden, die den Stauraum 20 vorgibt. Vielmehr ist die Abzugseinrichtung ausgebildet, indem die Küchendecke 82 als Abzugsdecke 84 gefertigt ist. Diese umfasst hierfür mehrere parallel verlaufende und nach unten offene Trapezkanäle 86 mit geneigten Flanken 88, welche durch jeweils einen Aerosolabscheider 30 gebildet sind, der zu einer Abluftkammer 26 führt. Dabei sind die Aerosolabscheider 30 jeweils oberhalb einer Kochstelle 14 angeordnet.

Jeder so gebildete Trapezkanal 86 begrenzt auf diese Weise einen Ansaugraum 18, der einen Stauraum 20 bildet, welcher in der oben beschriebenen Weise nach unten zum Küchenraum 12 hin offen ist.

Die Verbindungsglieder 76 mit den Sprühdüsen 40, die auch hier Venturidüsen 60 sind, sind an horizontalen Abschnitten 90 der Trapezkanäle 86 bzw. der Küchendecke 82 angebracht.

Ansonsten erfolgt die Reinigung der Abluftanlage 16 gemäß Figur 3 analog zu der Reinigung der Abluftanlage 16 gemäß Figur 1. Dementsprechend wird über die Sprühdüsen 40 in Abstimmung mit dem Abluftvolumenstrom Reinigungsmittel derart als Sprühnebel in die Stauräume 20 eingesprüht, dass alles Reinigungsmittel von dem Abluftstrom erfasst und mitgeschleppt wird, so dass kein Reinigungsmittel nach unten in den Küchenraum gelangen kann.

Bei allen erläuterten Ausführungsbeispielen kann eine hier nicht eigens gezeigte Bedienoberfläche vorhanden sein, welche den Status und die Aktivität des Reinigungssystems 38 anzeigt und über welche das Reinigungssystem 38 gegebenenfalls programmiert werden kann.

## Patentansprüche

1. Verfahren zum Betreiben einer Abluftanlage für eine Küche, bei welchem
a) mit Dünsten beladene Küchenabluft aus einem Küchenraum (12) abgesaugt wird und auf ihrem Strömungsweg (18, 26, 32) einen nach unten zu dem Küchenraum (12) hin offenen Ansaugbereich (18) einer Abzugseinrichtung (22; 84) sowie einen Abführkanal (35) durchströmt, wobei der nach unten offene Ansaugbereich (18) in Form eines Stauraums (20) für die angesaugte Küchenabluft von unten und aus seitlicher Richtung barriere- und schikanefrei zugänglich ist;
b) die Küchenabluft auf ihrem Strömungsweg (18, 26, 32) mit einem Reinigungsmittel beaufschlagt wird;
c) die Küchenabluft mit dem Reinigungsmittel beaufschlagt wird, bevor die Küchenabluft zum Abführkanal (35) gelangt;
d) ein Reinigungsmittel verwendet wird, welches außen liegende Oberflächen, die den Strömungsweg (18, 26, 32) begrenzen, benetzen und reinigen kann;
e) das Reinigungsmittel in den Ansaugbereich (18) eingebracht wird; **dadurch gekennzeichnet, dass**
f) das Reinigungsmittel über Sprühdüsen (40) in die Küchenabluft eingesprüht wird und als Sprühdüsen (40) Nebeldüsen verwendet werden; und
g) die Küchenabluft derart mit Reinigungsmittel beaufschlagt wird, dass dieses vollständig von dem Küchenabluftstrom erfasst und mitgeschleppt wird.

2. Verfahren nach Anspruch 1, **dadurch gekennzeichnet, dass** als Reinigungsmittel ein mikrobiologisch aktives Reinigungsmittel verwendet wird.

3. Verfahren nach einem der Ansprüche 1 oder 2, **dadurch gekennzeichnet, dass** die Küchenabluft auf ihrem Strömungsweg (18, 26, 32) durch eine Filtereinrichtung (28) strömt, bevor sie in den Abführkanal (35) gelangt.

4. Verfahren nach Anspruch 3, **dadurch gekennzeichnet, dass** die Küchenabluft mit dem Reinigungsmittel beaufschlagt wird, bevor sie zu der Filtereinrichtung (28) gelangt.

5. Abluftanlage für eine Küche eingerichtet zur Durchführung des Verfahrens nach einem der Ansprüche 1 bis 4 mit
a) einer Abzugseinrichtung (22; 84) mit einem nach unten zu einem Küchenraum (12) hin offenen Ansaugbereich (18), der zu einem Abführkanal (35) führt, wobei der nach unten offene Ansaugbereich (18) in Form eines Stauraums (20) für angesaugte Küchenabluft von unten und aus seitlicher Richtung barriere- und schikanefrei zugänglich ist;
b) einem Gebläsesystem (34), mittels welchem mit Dünsten beladene Küchenabluft aus dem Küchenraum (12) absaugbar ist, wobei die Küchenabluft auf ihrem Strömungsweg (18, 26, 32) den Ansaugbereich (18) der Abzugseinrichtung (22; 84) sowie den Abführkanal (35) durchströmt;
c) einem Reinigungssystem (38), mittels welchem die Küchenabluft auf ihrem Strömungsweg (18, 26, 32) mit einem Reinigungsmittel beaufschlagbar ist,
d) das Reinigungssystem (38) eine Abgabeeinrichtung (39) umfasst, mittels welcher die Küchenabluft mit dem Reinigungsmittel beaufschlagbar ist, bevor die Küchenabluft zum Abführkanal (35) gelangt, so dass außen liegende Oberflächen, die den Strömungsweg (18, 26, 32) begrenzen, benetzt und gereinigt werden können;
**dadurch gekennzeichnet, dass**
e) das Reinigungsmittel mittels der Abgabeeinrichtung (39) in den Ansaugbereich (18) einbringbar ist;
f) die Abgabeeinrichtung (39) Sprühdüsen (40) umfasst, die als Nebeldüsen ausgebildet sind.

6. Abluftanlage nach Anspruch 5, **dadurch gekennzeichnet, dass** das Reinigungsmittel ein mikrobiologisch aktives Reinigungsmittel ist.

7. Abluftanlage nach Anspruch 5 oder 6, **dadurch gekennzeichnet, dass** eine Filtereinrichtung (28) vorhanden ist, welche von der Küchenabluft auf ihrem Strömungsweg (18, 26, 32) durchströmt wird, bevor diese in den Abführkanal (35) gelangt.

8. Abluftanlage nach Anspruch 7, **dadurch gekennzeichnet, dass** die Küchenabluft mittels der Abgabeeinrichtung (39) mit dem Reinigungsmittel beaufschlagbar ist, bevor die Küchenabluft zu der Filtereinrichtung (28) gelangt.

9. Abluftanlage nach einem der Ansprüche 5 bis 8 **dadurch gekennzeichnet, dass** die Sprühdüsen (40) Venturidüsen (60) sind, die aus einer Druckluftquelle (66) mit Druckluft beaufschlagbar sind und eine Sogwirkung erzeugen, durch welche Reinigungsmittel über eine Leitung (46, 48, 56) aus einem Reinigungsmittelreservoir (44) zur Venturidüse (60) ansaugbar ist.

## Claims

1. Method for operating an exhaust air system for a kitchen, in which
a) kitchen exhaust air laden with vapours is extracted from a kitchen space (12) and, on its flow path (18, 26, 32), flows through a suction region (18) of an extraction device (22; 84), which suction region is downwardly open towards the kitchen space (12), and through a discharge channel (35), wherein the downwardly open suction region (18) in the form of a storage compartment (20) for the sucked-up kitchen exhaust air is accessible from below and from the lateral direction without barriers and obstacles;
b) a cleaning agent is applied to the kitchen exhaust air on its flow path (18, 26, 32);
c) the cleaning agent is applied to the kitchen exhaust air before the kitchen exhaust air reaches the discharge channel (35);
d) a cleaning agent is used which can wet and clean surfaces which lie on the outside and delimit the flow path (18, 26, 32);
e) the cleaning agent is introduced into the suction region (18);
**characterized in that**
f) the cleaning agent is sprayed into the kitchen exhaust air via spray nozzles (40), and mist nozzles are used as the spray nozzles (40); and
g) cleaning agent is applied to the kitchen exhaust air in such a manner that said cleaning agent is completely captured and entrained by the kitchen exhaust air flow.

2. Method according to Claim 1, **characterized in that** a microbiologically active cleaning agent is used as the cleaning agent.

3. Method according to either of Claims 1 and 2, **characterized in that** the kitchen exhaust air flows on its flow path (18, 26, 32) through a filter device (28) before entering the discharge channel (35).

4. Method according to Claim 3, **characterized in that** the cleaning agent is applied to the kitchen exhaust air before the latter reaches the filter device (28) .

5. Exhaust air system for a kitchen: designed for carrying out the method according to one of Claims 1 to 4, having
a) an extraction device (22; 84) with a suction region (18) which is downwardly open towards a kitchen space (12) and leads to a discharge channel (35), wherein the downwardly open suction region (18) in the form of a storage compartment (20) for sucked-up kitchen exhaust air is accessible from below and from the lateral direction without barriers and obstacles;
b) a fan system (34), by means of which kitchen exhaust air laden with vapours can be extracted from the kitchen space (12), wherein the kitchen exhaust air on its flow path (18, 26, 32) flows through the suction region (18) of the extraction device (22; 84) and through the discharge channel (35);
c) a cleaning system (38), by means of which a cleaning agent can be applied to the kitchen exhaust air on its flow path (18, 26, 32),
d) the cleaning system (38) comprises a dispensing device (39), by means of which the cleaning agent can be applied to the kitchen exhaust air before the kitchen exhaust air reaches the discharge channel (35), and therefore surfaces which lie on the outside and delimit the flow path (18, 26, 32) can be wetted and cleaned;
**characterized in that**
e) the cleaning agent can be introduced into the suction region (18) by means of the dispensing device (39);
f) the dispensing device (39) comprises spray nozzles (40) which are in the form of mist nozzles.

6. Exhaust air system according to Claim 5, **characterized in that** the cleaning agent is a microbiologically active cleaning agent.

7. Exhaust air system according to Claim 5 or 6, **characterized in that** there is a filter device (28) through which the kitchen exhaust air flows on its flow path (18, 26, 32) before entering the discharge channel (35).

8. Exhaust air system according to Claim 7, **characterized in that** the cleaning agent can be applied to the kitchen exhaust air by means of the dispensing device (39) before the kitchen exhaust air reaches the filter device (28).

9. Exhaust air system according to one of Claims 5 to 8, **characterized in that** the spray nozzles (40) are venturi nozzles (60) to which compressed air from a compressed air source (66) can be applied and which generate a suction action, by means of which cleaning agent can be sucked up via a line (46, 48, 56) from a cleaning agent reservoir (44) to the venturi nozzle (60).

## Revendications

1. Procédé d'actionnement d'une installation d'évacuation d'air destinée à une cuisine, dans lequel
a) de l'air évacué, chargé de vapeurs, est aspiré hors d'un espace de cuisine (12) et parcourt, sur son trajet d'écoulement (18, 26, 32), une zone d'aspiration (18) d'un dispositif d'extraction (22 ; 84), ouverte vers le bas en direction dudit espace (12) de la cuisine, ainsi qu'un canal de décharge (35), ladite zone d'aspiration (18) ouverte vers le bas, revêtant la forme d'un espace d'accumulation (20) dédié à l'air évacué de la cuisine, étant accessible de bas en haut et à partir d'une direction latérale, sans barrière ni chicane ;
b) l'air évacué de la cuisine est sollicité par un agent d'épuration sur son trajet d'écoulement (18, 26, 32) ;
c) l'air évacué de la cuisine est sollicité par l'agent d'épuration avant que ledit air, évacué de la cuisine, ne parvienne au canal de décharge (35) ;
d) il est fait usage d'un agent d'épuration apte à imprégner et à nettoyer des surfaces situées à l'extérieur, qui délimitent le trajet d'écoulement (18, 26, 32) ;
e) ledit agent d'épuration est introduit dans la zone d'aspiration (18) ;
**caractérisé par le fait que**
f) l'agent d'épuration est pulvérisé dans l'air, évacué de la cuisine, par l'intermédiaire de buses de pulvérisation (40), et des buses d'atomisation sont utilisées en tant que buses de pulvérisation (40) ;
g) l'air évacué de la cuisine est sollicité, par de l'agent d'épuration, de façon telle que ce dernier soit intégralement capturé et entraîné par le flux dudit air évacué de la cuisine.

2. Procédé selon la revendication 1, **caractérisé par le fait qu'**un agent d'épuration à activité microbiologique est utilisé en tant qu'agent d'épuration.

3. Procédé selon l'une des revendications 1 ou 2, **caractérisé par le fait que** l'air évacué de la cuisine circule à travers un dispositif de filtration (28), sur son trajet d'écoulement (18, 26, 32), avant qu'il ne parvienne dans le canal de décharge (35).

4. Procédé selon la revendication 3, **caractérisé par le fait que** l'air, évacué de la cuisine, est sollicité par l'agent d'épuration avant qu'il ne parvienne au dispositif de filtration (28).

5. Installation d'évacuation d'air destinée à une cuisine et agencée en vue de la mise en œuvre du procédé conforme à l'une des revendications 1 à 4, comprenant
a) un dispositif d'extraction (22 ; 84) muni d'une zone d'aspiration (18) ouverte vers le bas en direction d'un espace de cuisine (12), et menant à un canal de décharge (35), laquelle zone d'aspiration (18) ouverte vers le bas, revêtant la forme d'un espace d'accumulation (20) dédié à de l'air évacué de la cuisine, est accessible de bas en haut et à partir d'une direction latérale, sans barrière ni chicane ;
b) un système de soufflerie (34) au moyen duquel de l'air évacué, chargé de vapeurs, peut être aspiré hors dudit espace (12) de la cuisine, sachant que, sur son trajet d'écoulement (18, 26, 32), l'air évacué de la cuisine parcourt ladite zone d'aspiration (18) du dispositif d'extraction (22 ; 84), ainsi que ledit canal de décharge (35) ;
c) un système d'épuration (38) au moyen duquel l'air, évacué de la cuisine, peut être sollicité par un agent d'épuration sur son trajet d'écoulement (18, 26, 32),
d) lequel système d'épuration (38) inclut un dispositif de distribution (39) au moyen duquel l'air, évacué de la cuisine, peut être sollicité par l'agent d'épuration avant que ledit air évacué de la cuisine ne parvienne au canal de décharge (35), de telle sorte que des surfaces situées à l'extérieur, qui délimitent le trajet d'écoulement (18, 26, 32), puissent être imprégnées et nettoyées ;
**caractérisée par le fait que**
e) l'agent d'épuration peut être introduit dans la zone d'aspiration (18) au moyen du dispositif de distribution (39) ;
f) ledit dispositif de distribution (39) inclut des buses de pulvérisation (40) réalisées sous la forme de buses d'atomisation.

6. Installation d'évacuation d'air selon la revendication 5, **caractérisée par le fait que** l'agent d'épuration est un agent d'épuration à activité microbiologique.

7. Installation d'évacuation d'air selon la revendication 5 ou 6, **caractérisée par** la présence d'un dispositif de filtration (28) que l'air évacué de la cuisine parcourt, sur son trajet d'écoulement (18, 26, 32), avant que ce dernier ne parvienne dans le canal de décharge (35).

8. Installation d'évacuation d'air selon la revendication 7, **caractérisée par le fait que** l'air évacué de la cuisine peut être sollicité par l'agent d'épuration au moyen du dispositif de distribution (39) avant que ledit air, évacué de la cuisine, ne parvienne au dispositif de filtration (28).

9. Installation d'évacuation d'air selon l'une des revendications 5 à 8, **caractérisée par le fait que** les buses de pulvérisation (40) sont des buses de Venturi (60) qui peuvent être sollicitées par de l'air pressurisé, à partir d'une source (66) d'air pressurisé, et engendrent un effet d'aspiration par lequel de l'agent d'épuration peut être aspiré vers la buse de Venturi (60) à partir d'un réservoir (44) d'agent d'épuration, en empruntant un conduit (46, 48, 56).
